# EUROPÄISCHE PATENTANMELDUNG

(11) **EP 2 527 092 A2**
(43) Veröffentlichungstag der Anmeldung: **28.11.2012**
(21) Anmeldenummer: 12165310.9
(22) Anmeldetag: 24.04.2012
(51) Int. Cl.: B25B 23/00

(54) **Elektroschrauber**

(30) Priorität: 25.05.2011 DE 102011076454
(71) Anmelder: HILTI Aktiengesellschaft, 9494 Schaan (LI)
(72) Erfinder: Funk, Alexander, 86830 Schwabegg (DE); Widmer, Louis, 9631 Ulisbach (CH)

(57) **Zusammenfassung**

Ein Elektroschrauber hat eine Spindel **(11),** einen Sperrkörper **(16),** einen axial verschieblichen, radialen Anschlag **(31),** eine Feder **(22)** und einen Bügel **(23).** Die Spindel **(11)** hat einen längs einer Arbeitsachse **(4)** orientieren, abtriebsseitig offenen, zylindrischen oder prismatischen Aufnahmeraum **(12)** zum Aufnehmen eines Schrauberbits in Einsetzrichtung und ein in den Aufnahmeraum **(12)** in radialer Richtung einstechendes Langloch **(18).** Der Sperrkörper **(16)** ragt in dem Langloch **(18)** liegend in den Aufnahmeraum **(12)** hinein und zwischen einem abtriebsseitigen Ende des Langlochs **(18)** und einem antriebsseitigen Ende des Langlochs **(18)** beweglich. Der Sperrkörper **(16)** ist in radialer Richtung anliegend an dem radialen Anschlag **(31)** in den Aufnahmeraum **(12)** eingreifend gezwungen. Der radiale Anschlag **(31)** ist in einer verriegelnden Stellung mit dem abtriebsseitigen Ende des Langlochs **(18)** überlappend und gegen eine Federkraft einer Feder **(22)** entgegen der Einsetzrichtung verschiebbar, wodurch eine radiale Bewegung des Sperrkörpers **(16)** aus dem Eingriff mit dem Aufnahmeraum **(12)** freigegeben ist. Der Bügel **(23)** hintergreift antriebsseitig den Sperrkörper **(16)** und ist mittelbar durch den Sperrkörper **(16)** gegen eine Federkraft der Feder **(22)** aus einer mit dem antriebsseitigen Ende des Langlochs **(18)** überlappenden Stellung in die Einsetzrichtung verschiebbar.

## Beschreibung

### GEBIET DER ERFINDUNG

Die vorliegende Erfindung betrifft einen Elektroschrauber, insbesondere einen Elektroschrauber mit einer selbstverriegelnden Werkzeughalterung, welche durch Betätigen entgegen einer Einsetzeinrichtung des Werkzeugs entriegelbar ist.

### OFFENBARUNG DER ERFINDUNG

Der erfindungsgemäße Elektroschrauber hat eine Spindel, einen Sperrkörper, einen axial verschieblichen, radialen Anschlag, eine Feder und einen Bügel. Die Spindel hat einen längs einer Arbeitsachse orientieren, abtriebsseitig offenen, zylindrischen oder prismatischen Aufnahmeraum zum Aufnehmen eines Schrauberbits in Einsetzrichtung und ein in den Aufnahmeraum in radialer Richtung einstechendes Langloch. Der Sperrkörper ragt in dem Langloch liegend in den Aufnahmeraum hinein und zwischen einem abtriebsseitigen Ende des Langlochs und einem antriebsseitigen Ende des Langlochs beweglich. Der Sperrkörper ist in radialer Richtung anliegend an dem radialen Anschlag in den Aufnahmeraum eingreifend gezwungen. Der radiale Anschlag ist in einer verriegelnden Stellung mit dem abtriebsseitigen Ende des Langlochs überlappend und gegen eine Federkraft einer Feder entgegen der Einsetzrichtung verschiebbar, wodurch eine radiale Bewegung des Sperrkörpers aus dem Eingriff mit dem Aufnahmeraum freigegeben ist. Der Bügel hintergreift antriebsseitig den Sperrkörper und ist mittelbar durch den Sperrkörper gegen eine Federkraft der Feder aus einer mit dem antriebsseitigen Ende des Langlochs überlappenden Stellung in die Einsetzrichtung verschiebbar. In radialer Richtung kann angrenzend an das antriebsseitige Ende des Langlochs ein derartiger Hohlraum sein, dass der Sperrkörper in den Hohlraum eintretend den Aufnahmeraum vollständig verlassen kann. Der Anschlag kann verschoben entgegen der Einsetzeinrichtung einen Hohlraum in radialer Richtung angrenzend an das abtriebsseitige Ende des Langlochs freigeben.

Der Bügel schiebt den Sperrkörper in eine Grundstellung am oder nahe des abtriebsseitigen Lochendes. Der Sperrkörper kann in dieser Grundstellung aufgrund des Anschlags radial nicht ausweichen und blockiert durch seinen Eingriff in den Aufnahmeraum das Werkzeug. Ein Freigeben des Werkzeugs erfolgt durch Verschieben des Anschlags entgegen der Einsetzrichtung, wodurch der Sperrkörper nicht länger radial gehemmt ist. Beim Einsetzen des Werkzeugs lässt sich der Bügel mitsamt dem Sperrkörper gegen die Federwirkung in Einsetzrichtung verschieben. An dem antriebsseitigen Ende des Langlochs angelangt, kann der Sperrkörper radial ausweichen und den Aufnahmeraum für das Werkzeug freimachen.

Eine Ausgestaltung sieht vor, dass die Feder in Einsetzrichtung an dem Bügel und entgegen der Einsetzrichtung an einem mit dem Anschlag verbundenen Ring abgestützt ist.

Eine Ausgestaltung sieht vor, dass der Bügel als eine die Spindel umgebende und längs der Arbeitsachse bewegliche Hülse mit einem Langloch ausgebildet ist, wobei der Sperrkörper in das Langloch eingreift.

Eine Ausgestaltung sieht vor, dass eine Betätigungshülse, welche die Spindel, den Bügel und die Feder umgibt, einen radial nach innen vorspringenden Ring aufweist, dessen Innenfläche den radialen Anschlag ausbildet. Die Betätigungshülse kann in Einsetzrichtung angrenzend an den Ring in radialer Richtung einen um wenigstens eine Eingriffstiefe des Sperrkörpers in den Aufnahmeraum größeren Abstand zu der Arbeitsachse aufweisen als der radiale Anschlag.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Elektroschrauber,
Fig. 2 eine Werkzeughalterung mit verriegeltem Werkzeug,
Fig. 3 die Werkzeughalterung beim Einsetzen des Werkzeugs,
Fig. 4 die Werkzeughalterung beim Entnehmen des Werkzeugs,

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

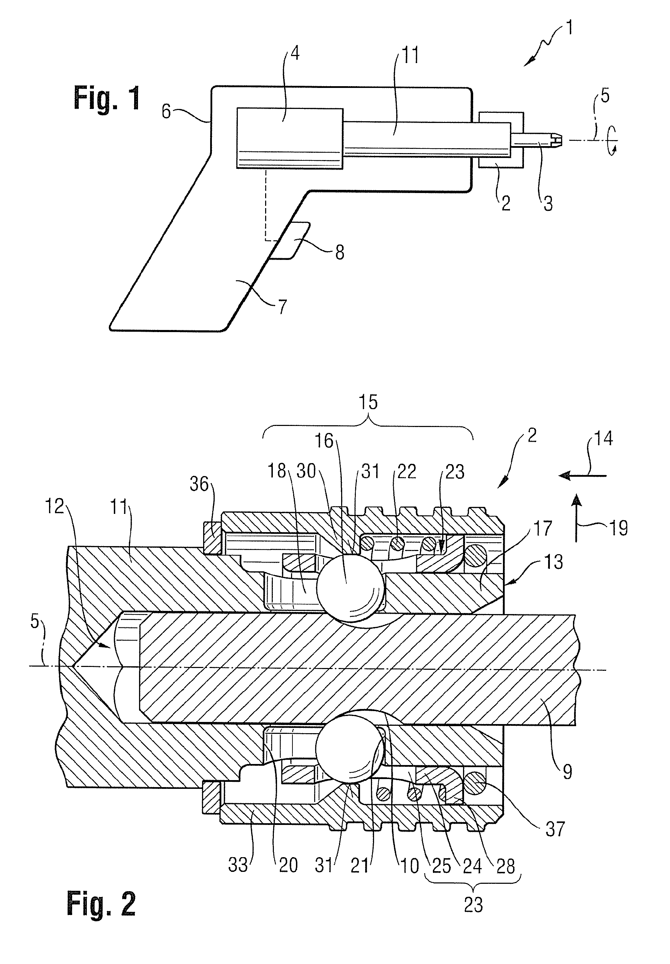

Fig. 1 zeigt schematisch einen Elektroschrauber **1.** Der Elektroschrauber **1** hat eine Werkzeughalterung **2** zum Aufnehmen eines Schrauberbits **3.** Ein Elektromotor **4** ist über einen Antriebsstrang mit der Werkzeughalterung **2** gekoppelt, um diese im Betrieb um eine Arbeitsachse **5** drehend anzutreiben. Ein Gehäuse **6** des Elektroschrauber **1** ist mit einem Handgriff **7** zum Führen des Elektroschrauber **1** und einem Systemschalter **8** zum in Betrieb nehmen des Elektroschrauber **1** durch den Anwender versehen.

Fig. 2, Fig. 3 und Fig. 4 zeigen im Längsschnitt eine beispielhafte Werkzeughalterung **2** mit eingesetztem Werkzeug **3,** bzw. beim Einsetzen und beim Entnehmen. Die Werkzeughalterung **2** ist insbesondere für die marktüblichen Schrauberbits **3** ausgelegt, deren prismatischer Schaft **9** mit einer ringförmigen Nut **10** versehen sind.

Eine Spindel **11** der Werkzeughalterung **2** ist antriebsseitig mit dem Motor **4** gekoppelt, welcher die Spindel **11** um die Arbeitsachse **4** drehend antreiben kann. Abtriebsseitig ist die Spindel **11** mit einem Aufnahmeraum **12** für den Schaft **9** versehen. Der Aufnahmeraum **12** ist komplementär zu dem Schaft **9,** beispielsweise prismatisch ausgebildet und an dem abtriebsseitigen Ende **13** der Spindel **11** offen. Ein Anwender kann das Werkzeug **3** längs der Arbeitsachse **4,** nachfolgend in einer Einsetzrichtung **14,** in den Aufnahmeraum **12** einführen.

Die Werkzeughalterung **2** ist mit einer selbstverriegelnden und durch den Anwender betätigt lösbaren Verriegelung **15** zum Verriegeln des Werkzeugs **3** in dem Aufnahmeraum **12** versehen. Das Verriegeln des Werkzeugs **3** erfolgt durch einen in die Nut **10** eingreifenden Sperrkörper **16,** welcher wie dargestellt beispielsweise durch eine Kugel ausgebildet ist.

Eine Wand **17** des hohlen Bereichs der Spindel **11** ist mit einem Langloch **18** versehen. Das Langloch **18** sticht bis in den Aufnahmeraum **12** durch. Der Sperrkörper **16** ist von außen radial in das Langloch **18** eingelegt und greift durch das Langloch **18** in den Aufnahmeraum **12** hinein. Eine Querschnittsfläche des Langlochs **18** kann in radialer Richtung **19** zu der Arbeitsachse **4** abnehmen, um den Sperrkörper **16** am Durchfallen in den Aufnahmeraum **12** zu hindern. Der Sperrkörper **16** ist in dem Langloch **18** längs der Arbeitsachse **4** von einem antriebsseitigen Ende **20** zu einem abtriebsseitigen Ende **21** beweglich. Eine Abmessung des Langlochs **18** längs der Arbeitsachse **4** ist größer als die zugehörige Abmessung des Sperrkörpers **16.** Das beispielhafte Langloch **18** ist länger als breit.

Der Sperrkörper **16** kann in radialer Richtung **19** nach außen angehoben und damit aus dem Eingriff mit dem Aufnahmeraum **12** gebracht werden. Das Anheben kann insbesondere durch den Schaft **9** erfolgen.

Eine Feder **22** schiebt den Sperrkörper **16** mittelbar entgegen der Einsetzrichtung **14** zu dem abtriebsseitigen Ende **21** des Langlochs **18.** Die Feder **22** wirkt auf einen axial beweglichen Bügel **23,** der den Sperrkörper **16** abtriebsseitig hintergreift. Der Bügel **23** kann beispielsweise wie dargestellt eine auf der Spindel **11** gelagerte Hülse **24** aufweisen, in welche ein Langloch **25** eingebracht ist. Das Langloch **25** der Hülse **24** kann formgleich zu dem Langloch **18** der Spindel **11** sein. Der Sperrkörper **16** greift radial in das Langloch **25** ein. Ein antriebsseitiges Ende **26** kann an dem Sperrkörper **16** abtriebsseitig, d.h. entgegen der Einsetzrichtung **14** weisend, anliegen. Die beispielhafte Hülse **24** ist an einem antriebsseitigen Ende **27** mit einem radial nach außen gestülpten Kragen **28** versehen, an welchem sich die Feder **22** abstützt. Die Feder **22** ist beispielsweise eine Schraubenfeder, welche die Hülse **24** umspannt.

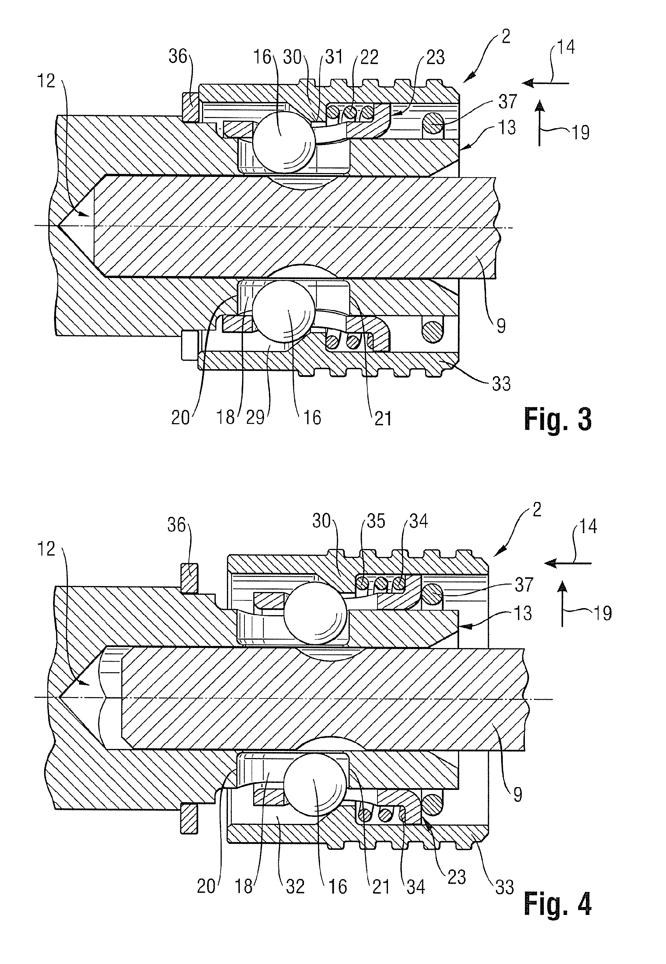

Beim Einsetzen eines Werkzeugs **3** wird der Sperrkörper **16** durch eine Stirnseite des Werkzeugs **3** in dem Langloch **18** in Einsetzrichtung **14** verschoben (vgl. Fig. 3). Dabei wird der Bügel **23** von dem Sperrkörper **16** mitgenommen und gegen die Federkraft der Feder **22** ausgelenkt. Im Bereich des antriebsseitigen Endes **20** des Langlochs **18** kann der Sperrkörper **16** immer in radialer Richtung **19** in einen Hohlraum **29** ausweichen. Der Sperrkörper **16** kann wenigstens soweit radial nach außen ausweichen, dass der Sperrkörper **16** nicht mehr im Eingriff mit dem Aufnahmeraum **12** ist. Der Schaft **9** kann an dem Sperrkörper **16** vorbeigeschoben werden, bis die Nut **10** axial auf der Höhe des Sperrkörpers **16** ist und der Sperrkörper **16** in die Nut **10** eingreifend wieder in den Aufnahmeraum **12** eindringt. Der Bügel **23** verschiebt den Sperrkörper **16** samt dem Werkzeug **3** entgegen der Einsetzrichtung **14,** bis die Feder **22** entspannt ist oder, wie in der Ausführungsform, bis der Sperrkörper **16** an dem abtriebsseitigen Ende **21** des Langlochs **18** anliegt (Fig. 2).

Ein Ring **30** ist auf axialer Höhe mit dem abtriebsseitigen Ende **21** des Langlochs **18** vorgesehen. Eine Innenfläche des Rings **30** bildet einen radialen Anschlag **31,** welcher eine radialer Bewegung des Sperrkörpers **16** radial nach Außen begrenzt. Ein radialer Abstand des Anschlags **31** zu der Arbeitsachse **31** ist derart bemessen, dass der Sperrkörper **16** anliegend an dem Anschlag **31** in den Aufnahmeraum **12** eingreift. Der durch den Bügel **23** am abtriebsseitigen Ende **21** gehaltene Sperrkörper **16** kann aufgrund des radialen Anschlags **31** nicht radial ausweichen, bleibt in die Nut **10** eingreifend und verriegelt somit das Werkzeug **3** in der Werkzeughalterung **2** (Fig. 2). Aus der das Langloch **18** überlappenden, verriegelnden Stellung kann der Ring **30** entgegen der Einsetzeinrichtung **14** verschoben werden. In einer entriegelten Stellung ist der Ring **30** ohne Überlapp mit dem Langloch **18,** insbesondere mit dem abtriebsseitigen Ende **21** des Langlochs **18** (Fig. 4). Der Sperrkörper **16** kann nun auch im Bereich des abtriebsseitigen Endes **21** in radialer Richtung **19** aus dem Aufnahmeraum **12** in einen Hohlraum **32** ausweichen. Der Ring **30** ist beispielsweise mit einer Betätigungshülse **33** verbunden, welche ein Anwender entgegen der Einsetzrichtung **14** verschieben und dabei das Werkzeug **3** entriegelt und entgegen der Einsetzrichtung **14** entnehmen kann.

Der Ring **30** ist durch die Feder **22** in die Einsetzeinrichtung **14** kraftbeaufschlagt. Beim Verschieben des Rings **30,** z.B. durch die Betätigungshülse **33,** entgegen der Einsetzrichtung **14** wird die Feder **22** gespannt. Sobald der Anwender die Betätigungshülse **33** loslässt, kehrt der Ring **30** mit dem radialen Anschlag **31** in die verriegelnde Stellung zurück. In einer Grundstellung, d.h. ohne Einwirkung des Anwenders, ist somit der Sperrkörper **16** durch den Bügel **23** am abtriebsseitigen Ende **21** und durch den radialen Anschlag **31** in den Aufnahmeraum **12** eingreifend gehalten (vgl. Fig. 2).

Die beispielhaft druckbelastete Feder **22** ist mit einem abtriebsseitigen Ende **34** mit dem Bügel **23,** z.B. dessen Kragen **28,** und einem antriebsseitigen Ende **35** mit dem Ring **30** verbunden. Der Ring **30** ist in Einsetzrichtung **14** gegenüber dem Kragen **28** versetzt. Ein antriebsseitig axialer Anschlag **36** begrenzt die Bewegung des Rings **30** in Einsetzrichtung **14,** d.h. hält den Ring **30** gegen die Federkraft in der verriegelnden Stellung. Die starr mit dem Ring **30** verbundene Betätigungshülse **33** kann beispielsweise an dem antriebsseitig axialen Anschlag **36** anliegen. Eine Bewegung des Bügels **23** entgegen der Einsetzrichtung **14** ist durch den Sperrkörper **16** begrenzt. Zusätzlich kann der Bügel **23** in der Grundstellung an einem antriebsseitig axialen Anschlag **37,** z.B. ein Sprengring, anliegen.

Die Erfindung ist nicht auf die dargestellten Ausführungsformen beschränkt. Anstelle des kugelförmigen Sperrkörpers **16** können auch andere axial bewegbare, z.B. walzenförmige Sperrkörper verwendet werden. Auch wenn eine parallel zur Arbeitsachse **4** orientiertes Langloch **18** bevorzugt ist, kann dieses alternativ spiralförmig um die Arbeitsachse **4** verlaufen. Anstelle zweier Sperrkörper **16** und zweier Langlöcher **18** können auch nur jeweils ein oder jeweils mehr als zwei vorgesehen sein. Der zylindrische Aufbau der Spindel **11,** des Bügels **23,** der Feder **22,** des Rings **30** und der Betätigungshülse **33** sind der drehenden Bewegung der Spindel **11** angepasst, können jedoch auch in nicht-drehsymmetrischer Form ausgestaltet sein.

## Patentansprüche

1. Elektroschrauber mit
einer Spindel **(11),** die einen längs einer Arbeitsachse **(4)** orientieren, abtriebsseitig offenen, zylindrischen oder prismatischen Aufnahmeraum **(12)** zum Aufnehmen eines Schrauberbits in Einsetzrichtung **(14)** und ein in den Aufnahmeraum **(12)** in radialer Richtung einstechendes Langloch **(18)** hat,
einem Sperrkörper **(16),** der in dem Langloch **(18)** liegend in den Aufnahmeraum **(12)** hineinragt und zwischen einem abtriebsseitigen Ende **(21)** des Langlochs **(18)** und einem antriebsseitigen Ende **(20)** des Langlochs **(18)** beweglich ist,
einem radialen Anschlag **(31),** an dem in radialer Richtung anliegend der Sperrkörper **(16)** in den Aufnahmeraum **(12)** eingreifend gezwungen ist, der in einer verriegelnden Stellung mit dem abtriebsseitigen Ende **(21)** des Langlochs **(18)** überlappt und entgegen der Einsetzrichtung **(14),** gegen eine Federkraft einer Feder **(22)** zum Freigeben einer radialen Bewegung des Sperrkörpers **(16)** aus dem Eingriff mit dem Aufnahmeraum **(12)** verschiebbar ist, und
einem Bügel **(23),** welcher den Sperrkörper **(16)** antriebsseitig hintergreift und mittelbar durch den Sperrkörper **(16)** in Einsetzrichtung **(14),** gegen eine Federkraft der Feder **(22)** aus einer mit dem antriebsseitigen Ende **(20)** des Langlochs **(18)** überlappenden Stellung verschiebbar ist.

2. Elektroschrauber nach Anspruch 1, **dadurch gekennzeichnet, dass** in radialer Richtung angrenzend an das antriebsseitige Ende **(20)** des Langlochs **(18)** ein derartiger Hohlraum **(29)** ist, dass der Sperrkörper **(16)** in den Hohlraum **(29)** eintretend den Aufnahmeraum **(12)** vollständig verlassen kann.

3. Elektroschrauber nach Anspruch 1 oder 2, **dadurch gekennzeichnet, dass** der Anschlag **(31)** verschoben entgegen der Einsetzeinrichtung **(14)** einen Hohlraum **(32)** in radialer Richtung **(19)** angrenzend an das abtriebsseitige Ende **(21)** des Langlochs **(18)** freigibt.

4. Elektroschrauber nach einem der vorhergehenden Ansprüche, **dadurch gekennzeichnet, dass** die Feder **(22)** in Einsetzrichtung **(14)** an dem Bügel **(23)** und entgegen der Einsetzrichtung **(14)** an einem mit dem Anschlag **(31)** verbundenen Ring **(30)** abgestützt ist.

5. Elektroschrauber nach einem der vorhergehenden Ansprüche, **dadurch gekennzeichnet, dass** der Bügel **(23)** als eine die Spindel **(11)** umgebende und längs der Arbeitsachse **(4)** bewegliche Hülse **(24)** mit einem Langloch **(25)** ausgebildet ist, wobei der Sperrkörper **(16)** in das Langloch **(25)** eingreift.

6. Elektroschrauber nach einem der vorhergehenden Ansprüche, **gekennzeichnet durch** eine Betätigungshülse **(33),** welche die Spindel **(11),** den Bügel **(23)** und die Feder **(22)** umgibt, und einen radial nach innen vorspringenden Ring **(30)** aufweist, dessen Innenfläche den radialen Anschlag **(31)** ausbildet.

7. Elektroschrauber nach Anspruch 6, **dadurch gekennzeichnet, dass** die Betätigungshülse **(33)** in Einsetzrichtung **(14)** angrenzend an den Ring **(30)** in radialer Richtung um wenigstens eine Eingriffstiefe des Sperrkörpers **(16)** in den Aufnahmeraum **(12)** größeren Abstand zu der Arbeitsachse **(4)** aufweist als der radiale Anschlag **(31).**
